# EUROPÄISCHE PATENTSCHRIFT

(11) **EP 3 255 374 B1**
(45) Veröffentlichungstag und Bekanntmachung des Hinweises auf die Patenterteilung: **09.01.2019**
(21) Anmeldenummer: 17173285.2
(22) Anmeldetag: 29.05.2017
(51) Int. Cl.: G01B 5/20, G01B 5/008, B23F 23/12

(54) **VERFAHREN ZUR PROFIL- UND/ODER TEILUNGSMESSUNG EINES VERZAHNTEN WERKSTÜCKES**
METHOD FOR PROFILE AND/OR PARTITION MEASUREMENT OF A NOTCHED WORKPIECE
PROCÉDÉ DE MESURE DE SÉPARATION ET/OU DE PROFIL D'UNE PIÈCE DENTÉE

(30) Priorität: 08.06.2016 DE 102016006957
(43) Veröffentlichungstag der Anmeldung: 13.12.2017
(73) Patentinhaber: Liebherr-Verzahntechnik GmbH, 87437 Kempten (DE)
(72) Erfinder: Winkel, Oliver, 87435 Kempten (DE)
(74) Vertreter: Laufhütte, Dieter

(56) Entgegenhaltungen:
- DE-C1- 3 705 537
- US-A1- 2016 116 269
- EGGERT WALTER ET AL: "Entwicklungstendenzen beim Wälzfräsen zylindrischer Verzahnungen", AUTONOME PRODUKTION, SPRINGER BERLIN HEIDELBERG, PAGE(S) 131 - 142 , 1. Januar 2004 (2004-01-01), XP009501313, ISBN: 3-540-00518-8 Gefunden im Internet: URL:https://rd.springer.com/chapter/10.100 7/978-3-642-18523-6_10 [gefunden am 2017-11-06]

## Beschreibung

Die Erfindung betrifft ein Verfahren zur Profil- und/oder Teilungsmessung eines verzahnten Werkstückes, dessen Zahnflanken aufgrund der Verzahnbearbeitung mit Vorschubmarkierungen versehen sind.

Die Verzahnungsmesstechnik kontrolliert und dokumentiert den geometrischen Zustand der Zahnradflanken und zeigt der Produktion ggf. vorhandene Abweichungen auf. Ziel der Messtechnik ist es, den durch die Industrie geforderten Qualitätsstandard gemäß DIN 3962 zu erreichen und nachhaltig zu erhalten. Die Überprüfung der Einzelabweichungen an Profil, Flankenlinien, Teilung und Rundlauf sind daher essentiell wichtig.

Bei einer Standardmessung wird ein Messtaster in einer Stirnschnittebene vom Zahnfuß bis zum Zahnkopf geführt und dadurch das Zahnprofil erfasst. Dieses Messverfahren ist bei glatten Zahnflanken zielführend. Bei Werkstücken, insbesondere bei Schrägverzahnungen mit Vorschubmarkierungen auf der Zahnflanke, ist die Standardmessung jedoch wenig aussagekräftig, da die Vorschubmarkierungstiefe die Auswertung verfälscht.

Eine Vorschubspirale die sich aus mehreren Vorschubmarkierungen zusammensetzt entsteht durch den Axialvorschub des Werkzeuges und der Drehung des Werkstücks. Während der Verzahnbearbeitung werden sowohl der Wälzfräser als auch das Werkstück gedreht. Zusätzlich zur Drehung des Wälzfräsers fährt dieser in Achsrichtung des Werkstückes an dem Werkstück entlang (axialer Vorschub), was zusammen mit dem Schrägungswinkel der Verzahnung eine spiralförmig am Werkstück verlaufende Vorschubmarkierung erzeugt. Bei Geradverzahnungen verlaufen diese entstandenen Vorschubmarkierungen nahezu parallel zur Zahnstirnseite. Bei Schrägverzahnungen ist jedoch zu beachten, dass je größer der Schrägungswinkel der Verzahnung ist, desto stärker ist die Neigung der Vorschubmarkierung und umso schneller ist mit einem Verlassen des Messtasters aus dem Werkstück zu rechnen, wenn er sich entlang der Vorschubmarkierung bewegt. Die in der Stirnschnittebene erfolgende Standard-Profilmessung schneidet folglich diese Welligkeit der Vorschubmarkierungen, wodurch sich im Profil eine Welligkeit ergibt. Bedingt durch die diagonal über die Flanke verlaufende Vorschubmarkierung werden folglich für einzelne Zähne bei gleicher Zahnbreitenposition unterschiedliche Bereiche der Vorschubmarkierung gemessen. Dies bedeutet, dass sich an jedem gemessenen Zahn ein andere Messkurve für die Profil-/Evolventenform ergibt, was wiederum in der Auswertung zu stark schwankenden Profilwinkeln führt, die zur Fehlinterpretation der Profilgenauigkeit führen.

Um dieser Problematik bei der Profilmessung in Verbindung mit Vorschubmarkierungen zu entgehen, wird im Stand der Technik bereits eine Vorschubkompensation der Profilmessung vorgeschlagen. Dabei sucht das Messgerät mittels einer Messung entlang der Zahnflanke nahe am Zahnfuß und einer zweiten Messung nahe am Zahnkopf die Hochpunkte der Vorschubmarkierung. Auf einer Geraden vom Zahnfuß bis zum Zahnkopf in der Mitte zwischen diesen Hochpunkten (im sogenannten Fräsertal) wird dann der Taster bei der vorschubkompensierten Profilmessung geführt. Diese Vorschubkompensation ist beispielsweise aus folgendem Buchkapitel bekannt: Eggert W., Faulstich I. (2004) Entwicklungstendenzen beim Wälzfräsen zylindrischer Verzahnungen. In: Klocke F., Pritschow G. (eds) Autonome Produktion. Springer, Berlin, Heidelberg.

Die zuvor beschriebene Problematik bei der Standardmessung tritt auch bei der sogenannten Teilungsmessung auf, bei welcher der Messtaster auf allen linken und anschließend allen rechten Zahnflanken das Zahnrad auf einem definierten Durchmesser auf gleicher Höhe bzw. Zahnbreite antastet. Bei einer Messung über den gesamten Werkstückumfang wandert der Messpunkt somit zwischen dem niedrigsten und höchsten Punkt der Vorschubmarkierung. Umgangen wird dies ebenfalls durch die zuvor beschriebene vorschubkompensierte Messung, bei der der Messpunkt immer annähernd im Fräsertal gehalten wird, d.h. der Messtaster wird von Zahn zu Zahn geführt und zusätzlich entsprechend der Vorschubgröße und -richtung in Axialrichtung nachgeführt. Bevorzugterweise wird der Taster in einer Vorschubmarkierung nahe des Tals der Vorschubmarkierung geführt. Dieses Tal wird bei der Fräsbearbeitung als sogenanntes Fräsertal bezeichnet. In diesem Fräsertal soll der Messtaster möglichst genau während des Messvorgangs gehalten werden.

Bei der Profilmessung wird stets über die gesamte Höhe der Zahnflanke vom Zahnfuß bzw. Fußformkreis bis zum Zahnkopf oder in umgekehrter Messrichtung gemessen. Eine Profilmessung wird vorzugsweise für wenigstens drei oder vier am Umfang des Werkstückes um 120°/90° zueinander versetzte Zähne ausgeführt, wobei das Profil der linken und rechten Zahnflanke für jeden Zahn abgetastet wird. Es ist ebenfalls denkbar, dass eine Profilmessung an einem Zahn des Werkstückes ausgeführt werden kann. In diesem Fall wird für jede Einzelmessung über die gesamte Zahnhöhe abgetastet. Die Messwerte der wenigstens drei bzw. vier Einzelmessungen werden nachfolgend als Ergebnis der erforderlichen Qualitätsmessung des Zahnprofils ausgegeben.

Die Vorschubkompensation lässt sich jedoch nur solange realisieren, solange das Zahnrad eine ausreichende Breite aufweist, denn die zeitgleiche Axialbewegung bewegt den Messtaster gleichzeitig zur Stirnseite der Zahnflanke. Bei nicht ausreichender Zahnbreite würde der Messtaster über einen vordefinierten Auswertebereich oder einen Sicherheitsabstand zur Stirnseite hinaustreten und ggf. die Werkstückbreite verlassen. Diese Problematik tritt insbesondere bei sehr schmalen Verzahnungen oder bei Verzahnungen mit großem Schrägungswinkel bei der Profilmessung auf. Ebenfalls kann die oben beschriebene Problematik bei der Teilungsmessung auftreten, da für eine Teilungsmessung alle Zähne abgetastet werden, d.h. sowohl die linke und rechte Zahnflanke eines jeden Zahns über den gesamten Werkstückumfang. Die Problematik liegt ebenfalls darin, dass das Werkstück für die vorschubkompensierte Messung eine bestimmte Werkstückgeometrie bei einem bestimmten Schrägungswinkel der Verzahnung aufweisen muss, sodass bisher bei Werkstücken mit geringer Zahnbreite nur eine Standardmessung möglich ist.

Ziel der Erfindung ist es somit, ein Messverfahren zu schaffen, welches mittels einer kompensierten Messung auf der Vorschubspirale eine aussagekräftige Profil- und/oder Teilungsauswertung auch für Verzahnungen mit geringer Zahnbreite und/oder einem Schrägungswinkel, bei welchem die Zahnbreite nach dem oben erläuterten Messverfahren nicht ausreichend ist und dabei das bereits bekannte Messverfahren nicht anwendbar ist ermöglicht.

Gelöst wird diese Problematik durch ein Verfahren gemäß den Merkmalen des Anspruchs 1. Vorteilhafte Ausgestaltungen des Verfahrens sind Gegenstand der unabhängigen Unteransprüche.

Erfindungsgemäß wird ein Messverfahren vorgeschlagen, dass sich sowohl für die Profilmessung als auch für die Teilungsmessung anwenden lässt. Ein Messtaster wird entsprechend der axialen Verlagerung der Vorschubmarkierung auf der Zahnflanke oder innerhalb der Vorschubspirale, welche aus mehreren Vorschubmarkierungen auf aufeinanderfolgenden Zahnflanken zusammengesetzt ist, nachgeführt. Das beanspruchte Verfahren basiert auf dem zuvor beschriebenen Kompensationsmessverfahren.

Erfindungswesentlich bei dem vorgeschlagenen Verfahren ist, dass der Messtaster bei der Messbewegung im Moment oder kurz vor dem Verlassen der Zahnflanke oder eines vordefinierten Auswertebereichs oder beim Erreichen eines Sicherheitsabstandes zur Zahnkante mittels eines axialen Tasterpositionswechsels in ein näher zur Verzahnungsmitte liegendes Vorschubmarkierungstal auf derselben Zahnflanke versetzt wird. Es kommt folglich zu einem, vorzugsweise senkrechten Sprung des Messtasters in Richtung der Zahnbreite. Die Sprungbewegung wird also während der Abtastung eines Zahnprofils oder einer Teilungsmessung ausgeführt. Die Sprungbewegung muss nicht notwendiger Weise senkrecht zur Zahnbreite erfolgen, wichtig ist lediglich der Wechsel in eine näher zur Verzahnungsmitte liegenden Vorschubmarkierung.

Während des Messverfahrens bewegt sich der geführte Taster innerhalb der Vorschubmarkierung, vorzugsweise innerhalb eines vordefinierten Auswertebereichs auf der Zahnflanke in axialer oder diametraler Richtung des Werkstückes und nähert sich dadurch dem Rand des Zahnes in Zahnbreitenrichtung, d.h. der Stirnseite des Werkstückes an. Ebenfalls kann in dem Messvorgang ein Sicherheitsabstand vorgesehen sein, welcher zwischen der Stirnseite und dem Auswertebereich angeordnet ist. Kurz vor dem Erreichen der Stirnseite oder des Sicherheitsabstandes wird der Messtaster entgegen dem axialen Vorschub in eine näher zur Verzahnungsmitte liegenden Vorschubmarkierung versetzt und in dieser kontinuierlich weitergeführt, bis das Zahnprofil vollständig erfasst oder bei der Teilungsmessung der vollständige Zahnradumfang abgetastet wurde oder aber bis der Messtaster sich wieder dem Sicherheitsabstand der Verzahnung annähert. In diesem Fall wird die Messung in der nächsten näher zur Verzahnungsmitte liegenden Vorschubmarkierung fortgesetzt.

Die Messung endet sobald die gesamte Zahnhöhe bzw. bei der Teilungsmessung alle Zahnflanken erfasst wurden.

Die Auswertung eines Zahnprofils und anschließende Darstellung in einem Messprotokoll erfolgt folglich durch Zusammensetzung von Teilen von Messkurven der jeweiligen in unterschiedlichen Vorschubmarkierungen erfolgten Messbewegungen.

Vorteilhaft ist es mit dieser Methode nunmehr Profilmessungen auch bei besonders schmalen Verzahnungen und/oder Verzahnungen mit einer in Relation zum Schrägungswinkel nicht ausreichender Zahnbreite, bei welcher die Profilmessung entlang des Vorschubmarkierungstals aus dem Werkstück rausläuft, durchzuführen. Bei diesen Verzahnungen kann das bereits vorbekannte vorschubkompensierte Messverfahren nicht mehr angewendet werden. Alternativ oder zusätzlich ist es denkbar, das Verfahren bei Flankenlinienmodifikationen, insbesondere in Form einer Breitenballigkeit oder einer Konizität oder einer weiterer Modifikationen anzuwenden. Gerade bei diesen tritt das Problem mit dem Verlauf der Vorschubmarkierungen zusätzlich auf. Daher ist gerade bei derartigen Zahnrädern die Anwendung dieses Verfahrens von großem Vorteil, da dadurch eine aussagekräftige und weniger fehlerbehaftete Messung durchführbar ist.

Des Weiteren ist die Verfahrensausführung für die Teilungsmessung bei Werkstücken mit Schrägverzahnung besonders vorteilhaft. Natürlich ist die Verfahrensausführung auch bei zu vermessenden Werkstücken mit Geradverzahnung sinnvoll. Weiterhin kann das zu vermessende Werkstück zusätzlich eine Flankenlinienmodifikation, insbesondere in Form einer Breitenballigkeit oder einer Konizität oder einer anderen Modifikation aufweisen. Daher ist gerade bei derartigen Zahnrädern die Anwendung dieses Verfahrens von großem Vorteil, da dadurch eine aussagekräftige und weniger fehlerbehaftete Messung durchführbar ist.

Ebenfalls ist es vorteilhaft, wenn der Taster beim Verlassen eines vordefinierten Auswertebereiches vollautomatisch einen Tasterpositionswechsel durchführt. Während des Messverfahrens bewegt sich der geführte Taster innerhalb der Vorschubmarkierung, vorzugsweise innerhalb eines vordefinierten Auswertebereiches in axialer Richtung des Werkstückes und nähert sich dadurch dem Rand des Zahnes in Zahnbreitenrichtung, d.h. der Stirnseite des Werkstückes an. Ebenfalls kann in dem Messvorgang ein Sicherheitsabstand vorgesehen, welche zwischen der Stirnseite und dem Auswertebereich angeordnet ist. Kurz vor dem Erreichen der Stirnseite oder des Sicherheitsabstandes wird der Messtaster entgegen dem axialen Vorschub in eine näher zur Verzahnungsmitte liegenden Vorschubmarkierung versetzt und in dieser kontinuierlich weitergeführt, bis das Zahnprofil vollständig erfasst oder bei der Teilungsmessung der vollständige Zahnradumfang abgetastet wurde. Das bietet den Vorteil, dass keine Fehlmessungen durch das Verlassen des Werkstückes mittels des Tasters entstehen. Ebenfalls bietet es den Vorteil, dass ein derartiges Messverfahren vielseitig angewendet werden kann.

Insbesondere zeichnet sich das Werkstück durch eine evolventenförmige Zahnflankenform aus. Denkbar ist eine Verfahrensausführung auch bei Werkstücken, die als sogenannte Segmenträder ausgestaltet sind. Bei diesen Werkstücken werden in den Messprotokollen die Messergebnisse für die nicht vorhandenen Zähne interpoliert.

Gemäß einer bevorzugten Ausgestaltung wird an einer Sprungstelle des Messtasters, d.h. im Moment des sogenannten Messtasterwechsels zwischen zwei Vorschubmarkierungen, eine mathematische Korrekturrechnung ausgeführt, um die Wahrscheinlichkeit eines zusätzlichen Profilwinkelfehlers im Messprotokoll weitestgehend zu reduzieren.

Als Basis für die mathematische Korrekturrechnung werden die Abweichungen der Zahnflanke aus der Flankenlinienmessung oder Profilmessung oder Topographiemessung angewendet. Zu Beginn werden für die Flankenlinienmessung an drei oder vier gleichmäßig am Zahnradumfang verteilten Zahnlücken Messungen durchgeführt. Ebenfalls kann zu Beginn eine Topographiemessung durchgeführt werden. Diese erfassten Messdaten dienen als Basis über den Verlauf der Zahnflanke und können als Basis für das erfindungsgemäße Auswerten und Anwenden des Verfahrens dienen. Nachdem der Verlauf der Flankenrichtung bekannt ist, können erfindungsgemäße Tasterpositionswechsel und die entsprechende Abweichung der Zahnflanke mathematisch berücksichtigt werden. Das bietet den Vorteil, dass eventuelle Abweichungen bei dem erfindungsgemäßen Verfahren anhand der Flankenlinienmessung oder Profilmessung oder Topographiemessung mit mathematischen Korrekturen einfach und schnell erkannt und ausgeglichen werden.

Die mathematische Korrekturrechnung kann ebenfalls in Form einer Überlappung bzw. einer Überlagerung von Teilen der Messkurve angewendet werden. Eine Überlappung bzw. Überlagerung wird mittels eines diagonalen Sprunges des Messtasters in die näher zur Verzahnungsmitte liegenden Vorschubmarkierung erzielt. Dabei werden Teilbereiche vom Anfang und Ende der Messkurve im Bereich des Tasterpositionswechsels in Überdeckung gebracht und mathematisch berücksichtigt. Das bietet den Vorteil dass bei den Messkurven die Teilsegmente stetig miteinander verbunden sind und somit eine stetige Messkurve erzielt werden kann.

Das erfindungsgemäße Verfahren ist für Werkstücke anwendbar, die mittels eines ein- oder mehrgängigen Werkzeuges, insbesondere Wälzfräsers, gefertigt wurden. Wurde ein mehrgängiges Werkzeug, insbesondere Fräswerkzeug eingesetzt, ist bei einem Sprung zwischen benachbarten Vorschubmarkierungen darauf zu achten, dass diese bevorzugterweise innerhalb des jeweiligen Werkzeugganges, insbesondere Fräserganges liegen. Das Verfahren wird sinnvoller Weise für jeden einzelnen Werkzeuggang wiederholt. Ebenfalls ist es denkbar, dass die Gangzahl manuell eingegeben werden muss. Ist ein Sprung nicht innerhalb eines Werkzeugganges möglich, da beispielsweise die Zahnbreite lediglich ein Sprung in die darauffolgende Vorschubmarkierung und somit einem anderen Gang zulässt, müssen Gangteilungsfehler beachtet werden. Die Informationen zur Größe des Gangteilungsfehlers können aus der Teilungsmessung gewonnen werden. Zudem ist bei diesen Werkstücken eine Interpolation der Messergebnisse in den Messprotokollen möglich.

Des Weiteren ist es vorteilhaft, dass mindestens zwei Vorschubmarkierungen an dem verzahnten Werkstück angeordnet sind. Eine Unterschreitung der Vorschubmarkierungsanzahl hätte zur Auswirkung, dass keine aussagekräftige Profilmessung durchführbar wäre. Da das erfindungsgemäße Verfahren ein Ausweichen des Messtasters auf die benachbarte Vorschubmarkierung bedingt, muss eine Mindestanzahl an Vorschubmarkierungen vorhanden sein.

Es ist vorteilhaft, dass das Verfahren innerhalb einer Maschine, insbesondere einer Messmaschine oder einer CNC-Verzahnmaschine mit einem Messtaster durchgeführt werden kann. Die Durchführung des erfindungsgemäßen Messverfahrens innerhalb einer CNC-Verzahnmaschine bietet den Vorteil, dass keine separate Einheit benötigt wird, um ein derartiges Messen durchzuführen. Ebenfalls ist es denkbar, das erfindungsgemäße Messverfahren in eine Verzahnmessmaschine zu integrieren um damit bedarfsweise, je nach verzahnten Werkstück das Verfahren durchzuführen. Die vorliegende Erfindung umfasst weiterhin eine Auswerteeinheit, welche derart ausgestaltet ist, dass das oben beschriebene erfindungsgemäße Messverfahren durchführbar ist. Eine derartige Einheit kann eine Steuerung oder ein Computerprogramm etc. enthalten, sodass die oben näher beschriebenen Funktionalitäten gegeben sind. Ebenfalls ist die Auswerteeinheit in der Lage, ein entsprechendes Messprotokoll zu generieren.

Weitere Vorteile und Eigenschaften der Erfindung sollen im Folgenden anhand eines in den Zeichnungen dargestellten Ausführungsbeispiels näher erläutert werden. Es zeigen:
- Figur 1:: eine Darstellung eines aus dem Stand der Technik bekannten Messprotokolls für eine Profilmessung;
- Figur 2a:: eine Skizzierung des erfindungsgemäßen Messverfahrens anhand eines verzahnten Werkstückes zur Profilmessung;
- Figur 2b:: ein Teilausschnitt eines Messprotokolls für das erfindungsgemäße Messverfahren;
- Figur 3a:: eine Skizzierung des erfindungsgemäßen Messverfahrens anhand eines alternativen Messobjekts zur Profilmessung;
- Figur 3b:: ein Teilausschnitt eines Messprotokolls für das erfindungsgemäße Messverfahren anhand eines alternativen Messobjekts zur Profilmessung;
- Figur 4:: eine Skizzierung des erfindungsgemäßen Messverfahrens anhand eines verzahnten Werkstückes zur Profilmessung mit einer Überlappung der Messkurve;
- Figur 5:: eine Skizzierung des erfindungsgemäßen Messverfahrens für ein alternatives Messobjekt zur Profilmessung mit einer Überlappung der Messkurven;
- Figur 6:: eine Skizzierung des erfindungsgemäßen Messverfahrens für die Teilungsmessung und
- Figur 7:: ein aus dem Stand der Technik bekanntes Messprotokoll für die Teilungsmessung.

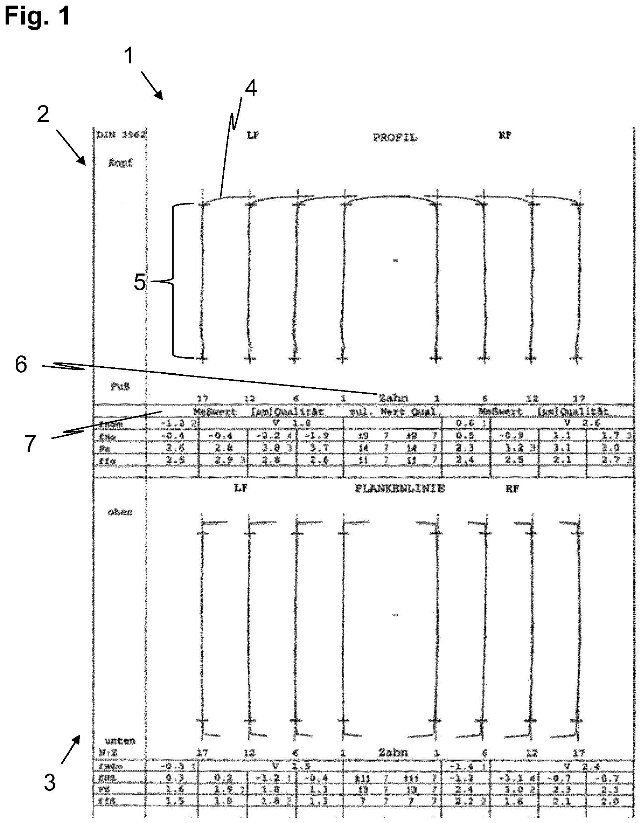

Die Figur 1 zeigt ein an sich bekanntes Messprotokoll 1. Dargestellt wird hier die Profilauswertung 2 sowie die Flankenlinienauswertung 3, wobei der Auswertebereich der Flankenlinienauswertung nicht dem erfindungsgemäßen Auswertebereich 17 entspricht (In Figur 1 dargestellt). Aus der Charakteristika der Prüfkurven sowie die Form und Richtung der aufgenommenen Prüfbilder lassen sich wichtige Rückschlüsse auf die Fertigungsqualität des Werkstücks ableiten. Die Profilauswertung eines idealen Messvorgangs wird hier dargestellt, was bedeutet, dass eine Messung aller Profile über die gesamte Zahnhöhe und innerhalb der Vorschubspirale realisierbar war. Als Auswertebereich 5 wird lediglich der Bereich zur Auswertung herangezogen, welcher der Evolventen-Kurve entspricht. Ebenfalls wird durch die Erfordernis aussagefähige Informationen über die Profilform der Evolventen-Zahnflanken zu erhalten, eine Messung an vier um 90° versetzten Zähnen durchgeführt, wobei die Nummer der gemessenen Zähne 6 im Messprotokoll ebenfalls festgehalten wird, hier die Zahnnummern 1, 6, 12 und 17, wobei deren Profil für die linke und rechte Zahnflanke LF, RF erfasst wurde. Zudem ermöglicht ein derartiges Messprotokoll Aussagen über die Qualität des Zahnrades 8 im Vergleich zu geforderten Qualitätswerten 7 zu treffen.

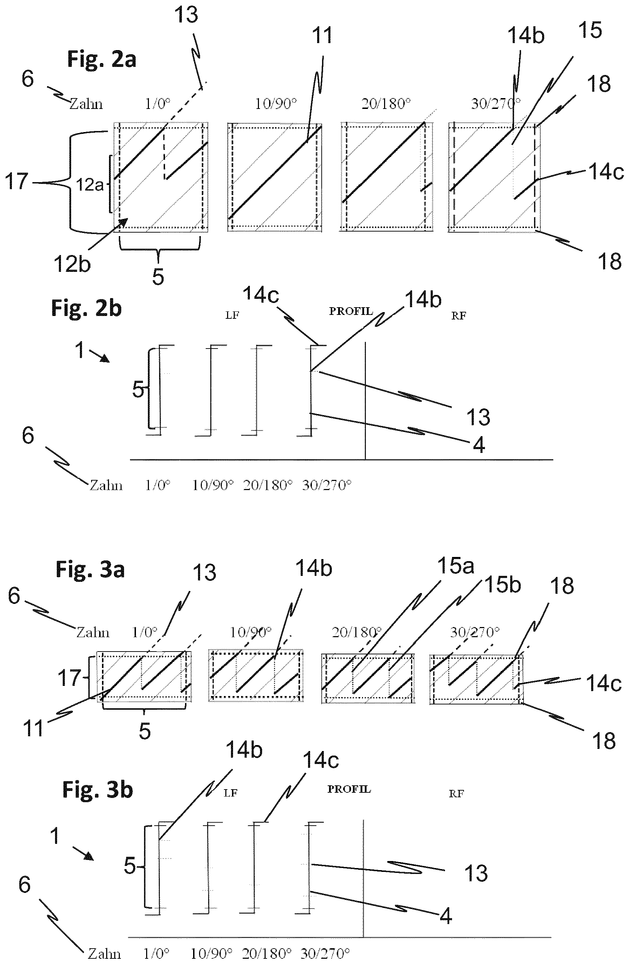

Figur 2 zeigt das erfindungsgemäße vorschubkompensierte Messverfahren für Verzahnungen mit schmaler Zahnbreite.

Die obere Figur 2a zeigt ein exemplarisches erfindungsgemäßes Messverfahren an einem schmalen Zahnrad. Wie bereits oben erläutert, werden bei der Profilmessung lediglich vier um 90° über den Zahnradumfang versetzt zueinander liegende Zähne 6 gemessen. Für die vier zu messenden Zähne 6 werden vordefinierte Auswertebereiche 5, 17 festgelegt, welche bei allen vier Zähnen 6 identisch sind. Beim Abfahren des Messtasters entlang der Tasterführungsbahn 11, innerhalb der Vorschubmarkierung 12a, 12b, wird im Moment oder kurz vor dem Verlassen der Zahnbreite oder beim Erreichen des Sicherheitsabstandes 18 mittels eines Tasterpositionswechsels am Messpunkt 14b der Taster in eine benachbarte Vorschubmarkierung 12b versetzt. Es wird zur Verdeutlichung ebenfalls die theoretische Tasterführungsbahn 13 aufgezeigt, um den Verlauf des Messtasters ohne Tasterpositionswechsel zu verdeutlichen.

Die Figur 2b stellt eine idealisierte Profilauswertung dar. Aus Gründen der Übersichtlichkeit wurden die Prüfkurven 4 idealisiert und lediglich für die linke Flanke LF dargestellt. Die Profilauswertung zeigt die in Figur 2a bereits beschriebene Vorgehensweise in einem Messprotokoll 1 auf, sodass die Messkurve der theoretischen Tasterführungsbahn 13 ebenfalls vollständigkeitshalber aufgezeigt wird. Die Darstellung der theoretischen Tasterführungsbahn 13 verdeutlicht in der Messkurve die Problematik ohne Tasterpositonswechsel 15. Ebenfalls stellt die Figur 2b die jeweiligen Prüfkurven 4 für den jeweiligen Zahn 6 auf. Das Protokoll 1 zeigt bei den Zähnen 10/90° und 20/180° einen optimalen Messvorgang, da wie bereits erläutert eine vollständige Profilmessung mittels des Messtasters erfolgen konnte. Die Prüfkurve der Zähne 1/0° und 30/270° symbolisieren die Auswertung eines Messverfahrens mittels eines Tasterpositionswechsels am Messpunkt 14b.

Bedingt durch die Vorschubspirale verhält sich der Messvorgang an dem ersten Zahn 1/0° anders, da die Tasterführungsbahn 11 zur Stirnseite des Zahnrades verschoben wird und der Messtaster die Schutzzone erreichen würde. Gemäß dem erfindungsgemäßen Verfahren springt der Taster senkrecht von der Vorschubmarkierung 12a in die nachfolgende Vorschubmarkierung 12b und die Profilmessung des Zahns wird bis zum Erreichen des Zahnkopfes im Fräsertal dieser Vorschubmarkierung 12b abgeschlossen. Der Sprung des Messtasters ist durch die Sprungbahn 15 beschrieben, die parallel zur Zahnbreite verläuft. Die theoretische Führungsbahn des Tasters ohne Sprung ist mit dem Bezugszeichen 13 angedeutet.

Auch beim Zahn 30/270° ist ein Sprung des Messtasters notwendig, was durch den Sprung am Messpunkt 14b bzw. die Sprungbahn 15 angedeutet ist. Der Auswertebereich 5 setzt sich somit aus den einzelnen Teilmessungen innerhalb der Vorschubmarkierungen 12a, 12b zusammen. Die Auswertung der Profilkurve 4 findet wie bereits in Figur 2 beschrieben mittels mathematischer Korrekturrechnungen statt.

Die Figur 3a und 3b zeigen ebenfalls das erfindungsgemäße vorschubkompensierte Messverfahren für Verzahnungen mit noch schmalerer Zahnbreite auf. Allerdings soll in den beiden Figuren verdeutlicht werden, wie sich das erfindungsgemäße Verfahren durch die Zahnbreite verändert. Es ist erkennbar, dass keine einzige Profilmessung über die gesamte Zahnbreite realisierbar ist, sodass eine aussagekräftige Profilauswertung lediglich durch eine Zusammensetzung der Messungen der Teilprofile für jeden Zahn 6 möglich ist. Es wird verdeutlicht, dass durch eine Veränderung der Zahnbreite mehrere Tasterpositionswechsel 15 von Nöten sind, sodass die bereits genannten Vorteile hervorgehoben werden. Die Auswertung der Profilkurve 4 findet wie bereits in Figur 2 beschrieben mittels mathematischer Korrekturrechnungen statt.

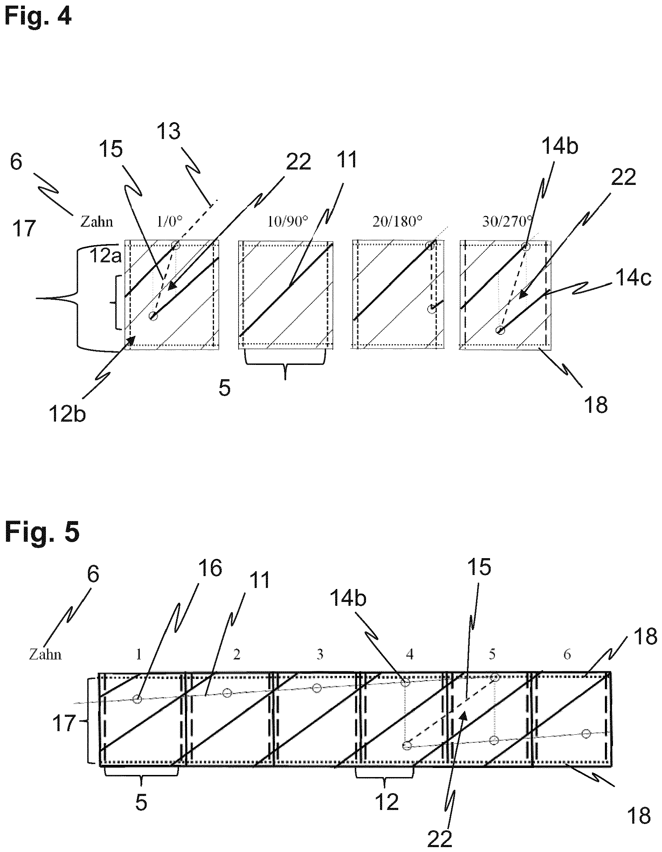

Figur 4 zeigt ein exemplarisches erfindungsgemäßes Messverfahren an einem schmalen Zahnrad mit einer Überlappung 22 der Messstrecke. Beim Verlassen des Werkstückes durch den Taster, wird ein diagonaler Sprung durchgeführt, sodass eine Überlappung 22 der Messbereiche realisierbar ist. Eine derartige Überlappung bzw. Überlagerung von Teilen der Messkurve im Bereich des Tasterpositionswechsels dient der Vereinfachung der mathematischen Korrekturrechnung. Die Teilsegmente der Messkurven werden somit stetig miteinander verbunden und somit die Möglichkeit geschaffen, eine stetige Messkurve zu erzielen.

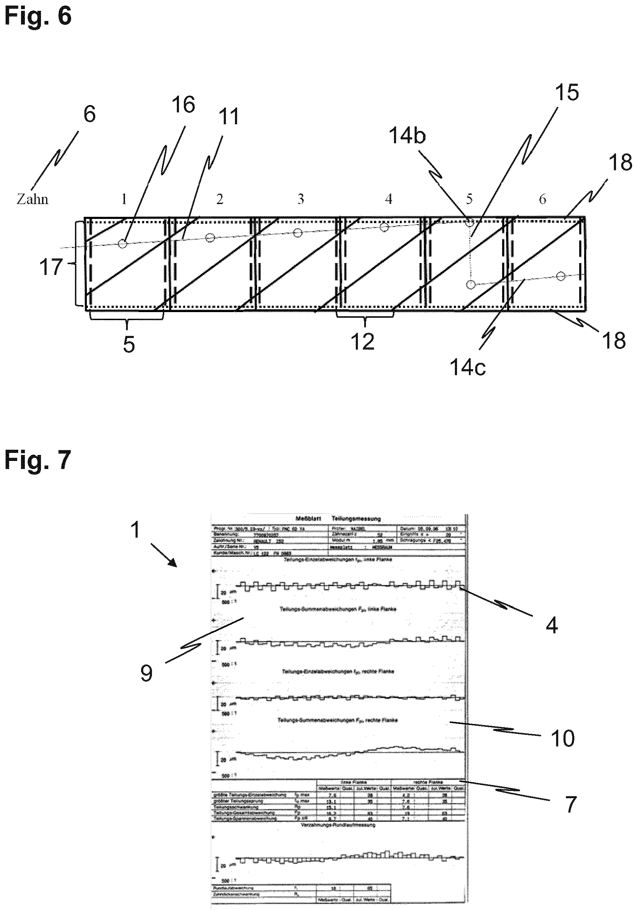

Das erfindungsgemäße Verfahren ist nicht nur für die reine Profilmessung einsetzbar, sondern ebenfalls für eine Teilungsmessung des Zahnrades. Ein Beispiel eines Prüfprotokolls für die Teilungsmessung ist in der Figur 7 wiedergegeben. Erkennbar ist die Prüfkurve 4, die über alle Zähne des Werkstückes verläuft, wobei die Darstellung zwischen einer Prüfkurve 4 für alle linken Zahnflanken 9 und einer Prüfkurve für alle rechten Zahnflanken 10 unterscheidet.

Die Figur 5 zeigt das bereits in Figur 4 beschriebenen Messverfahren mit einer Überlappung bzw. Überlagerung von Teilen der Messkurve im Bereich des Tasterpositionswechsels bei der Teilungsmessung.

Figur 6 zeigt die Tasterführungsbahn 11 bei der Ausführung des erfindungsgemäßen vorschubkompensierten Messverfahrens zur Prüfung der Zahnteilung eines schmalen Zahnrades. Bei der Teilungsmessung wird anders als bei der Profilmessung jeder Zahn 6 des Werkstückes separat innerhalb der Vorschubspirale abgetastet, sodass eine ähnliche Problematik auftreten kann wie bei der Profilmessung. Wie bereits in der Figur 2 erklärt, wird beim Erreichen des Punktes der Auswertebereichsänderung mittels eines Tasterpositionswechsels am Messpunkt 14b entlang der Sprungbahn 15 in die nachfolgende Vorschubmarkierung gewechselt und die Messung weitergeführt.

Das erfindungsgemäße Verfahren ist bei der Profil- und Teilungsmessung von schmalen Zahnrädern einsetzbar. Auch lassen sich Verzahnungen mit Schrägungswinkel auswerten. Messungen bei Segmenträdern sind ebenfalls realisierbar. Der wesentliche Vorteil des Verfahrens ist darin zu sehen, dass eine gute und aussagekräftige Profilauswertung für schmale Verzahnungen möglich ist. Das Verfahren ist zudem aus konstruktiver und messtechnischer Sicht einfach zu realisieren.

## Patentansprüche

1. Verfahren zur Profil- und/oder Teilungsmessung eines verzahnten Werkstückes, dessen Zahnflanken aufgrund der Verzahnbearbeitung mit Vorschubmarkierungen (12a, 12b) versehen sind, wobei ein Messtaster entsprechend der diametral axialen Ausrichtung der Vorschubmarkierungen (12a, 12b) auf der Zahnflanke oder innerhalb der Vorschubspirale, welche aus mehreren Vorschubmarkierungen(12a, 12b) aus aufeinanderfolgenden Zahnflanken zusammengesetzt ist, nachgeführt wird, **dadurch gekennzeichnet,**
**dass** der Messtaster bei der Messbewegung bei oder kurz vor dem Verlassen der Zahnflanke und/oder eines vordefinierten Auswertebereichs (5, 17) und/oder beim Erreichen eines Sicherheitsabstandes (18) zur Zahnkante mittels eines axialen Tasterpositionswechsels (15) in ein näher zur Verzahnungsmitte liegendes Vorschubmarkierungstal (12b) auf derselben Zahnflanke versetzt wird.

2. Verfahren nach einem der vorhergehenden Ansprüche, **dadurch gekennzeichnet, dass** bei der Profilmessung das zu vermessende Werkstück eine Schrägverzahnung und eine in Relation zum Schrägungswinkel nicht ausreichende Zahnbreite aufweist, bei welcher die Profilmessung entlang des Vorschubmarkierungstals aus der Werkstückbreite rausläuft und/oder eine Flankenlinienmodifikation, insbesondere in Form einer Breitenballigkeit und/oder einer Konizität oder einer anderen Modifikation aufweist.

3. Verfahren nach einem der vorhergehenden Ansprüche, **dadurch gekennzeichnet, dass** bei der Teilungsmessung das zu vermessende Werkstück eine Schrägverzahnung oder eine Geradverzahnung ist und eine Flankenlinienmodifikation, insbesondere in Form einer Breitenballigkeit und/oder eine Konizität oder einer anderen Modifikation, aufweist.

4. Verfahren nach einem der vorhergehenden Ansprüche, **dadurch gekennzeichnet, dass** der Messtaster beim Verlassen eines vordefinierten Auswertebereiches (5, 17) entlang der Profillinie oder der Zahnbreite vollautomatisch einen Tasterpositionswechsel (15) durchführt.

5. Verfahren nach einem der vorhergehenden Ansprüche, **dadurch gekennzeichnet, dass** das zu vermessende Werkstück ein Segmentrad ist.

6. Verfahren nach einem der vorhergehenden Ansprüche, **dadurch gekennzeichnet, dass** an einer Sprungstelle des Messtasters zwischen zwei Vorschubmarkierungen (12a, 12) eine mathematische Korrekturrechnung ausgeführt wird, um einen zusätzlichen Profilwinkelfehler im Messprotokoll zu vermeiden.

7. Verfahren nach Anspruch 6, **dadurch gekennzeichnet, dass** als mathematische Korrekturrechnung die Abweichung aus der Flankenlinienmessung und/oder einer Profilmessung und/oder einer Topographiemessung als Basis angewendet wird.

8. Verfahren nach Anspruch 6, **dadurch gekennzeichnet, dass** als mathematische Korrekturrechnung eine Überlagerung von Teilen der Messkurve, insbesondere der Profil- oder Teilungsmesskurve angewendet wird.

9. Verfahren nach einem der vorhergehenden Ansprüche, **dadurch gekennzeichnet, dass** das Verfahren für Werkstücke anwendbar ist, die mit einem ein- oder mehrgängigen Fräser gefertigt wurden, wobei bei einer Verzahnung mittels mehrgängigen Fräser ein Sprung zwischen benachbarten Vorschubmarkierungen (12a, 12b), bevorzugterweise nur innerhalb des Fräsergangs erfolgt und/oder für jeden Werkzeuggang separat wiederholt wird.

10. Verfahren nach einem der vorhergehenden Ansprüche, **dadurch gekennzeichnet, dass** mindestens zwei Vorschubmarkierungen (12a, 12b) je Flanke an dem verzahnten Werkstücken angeordnet sind.

11. Verfahren nach einem der vorhergehenden Ansprüche, **dadurch gekennzeichnet, dass** das Verfahren innerhalb einer Maschine, insbesondere einer Messmaschine oder einer CNC-Verzahnmaschine mit einem Messtaster durchgeführt werden kann.

12. Auswerteeinheit mit einer Steuerung oder einem Computerprogramm zur Durchführung des Verfahrens nach den Ansprüchen 1 bis 11.

## Claims

1. A method for profile and/or separation measurement of a toothed workpiece, the tooth flanks of which are provided with feed marks (12a, 12b) due to the tooth forming processing, wherein a measuring probe is guided along corresponding to the diametral axial orientation of the feed marks (12a, 12b) on the tooth flank or within the feed spiral, which is composes of multiple feed marks (12a, 12b) of successive tooth flanks, **characterized in that**
the measuring probe, in the measuring movement in or shortly before leaving the tooth flank and/or a predefined assessment region (5, 17) and/or when reaching a security distance (18) to the took flank is displaced into a feed mark valley (12b), at the same tooth flank, located closer to the toothing center, by means of an axial transducer position change (15).

2. Method according to one of the preceding claims, **characterized in that** in the profile measurement, the workpiece to be measured comprises an inclined toothing, and a tooth width non-sufficient in relation to the inclination angle, in which the profile measurement runs out of the workpiece width along the feed mark valley, and/or a flank line modification, in particular in the form of a crowing and/or a conicity or another modification.

3. Method according to one of the preceding claims, **characterized in that** in the division measurement, the workpiece to be measured is an inclined toothing or a straight toothing and has a flank line modification, in particular in the form of a crowing, and/or a conicity, or another modification.

4. Method according to one of the preceding claims, **characterized in that** the measuring probe performs a probe position change (15) in a fully automatic manner when leaving a predefined assessment region (5, 17) along the profile line or the tooth width.

5. Method according to one of the preceding claims, **characterized in that** the workpiece to be measured is a segment wheel.

6. Method according to one of the preceding claims, **characterized in that** a mathematic corrective calculation is performed at the jump position of the measuring probe between two feed marks (12a, 12) in order to avoid an additional profile angle error in the measuring protocol.

7. Method according to claim 6, **characterized in that** the deviation from the flank line measurement and/or a profile measurement and/or a topographical measurement as a base is used as the mathematic corrective calculation.

8. Method according to claim 6, **characterized in that** a superposition of parts of the measuring curve, in particular of the profile or partition measuring curve, is used as the mathematic corrective calculation.

9. Method according to one of the preceding claims, **characterized in that** the method can be used for workpieces manufactured with a mono-form or multiform milling cutter, wherein, in a toothing by means of a multiform milling cutters, a leap between neighboring feed marks (12a, 12b) preferably occurs only within the milling process, and/or is repeated separately for each tool process.

10. Method according to one of the preceding claims, **characterized in that** at least two feed marks (12a, 12b) per flank are arranged on the toothed workpieces.

11. Method according to one of the preceding claims, **characterized in that** the method can be performed within a machine, in particular a measuring machine, or a CNC toothing machine with a measuring probe.

12. Evaluation unit with a control or a computer program for performing the method according to claims 1 to 11.

## Revendications

1. Procédé de mesure du pas et/ou du profil d'une pièce dentée, dont les flancs de dent, en raison de l'usinage d'engrenage, sont pourvus de marques d'avancement (12a, 12b), un palpeur de mesure étant guidé dans le sens axial des marques d'avancement (12a, 12b) sur le flanc de dent ou à l'intérieur de la spirale d'avancement, laquelle est constituée de plusieurs marques d'avancement (12a, 12b) sur des flancs de dent successifs, **caractérisé en ce que**
le palpeur de mesure est décalé lors du mouvement de mesure, au moment de quitter, ou juste avant de le faire, le flanc de dent et/ou une zone d'évaluation (5, 17) prédéfinie et/ou au moment d'atteindre une distance de sécurité (18) par rapport au bord de dent au moyen d'un changement axial de la position du palpeur (15) dans un creux de marquage d'avancement (12b) situé plus près du centre de la denture sur le même flanc de dent.

2. Procédé selon l'une quelconque des revendications précédentes, **caractérisé en ce que** lors de la mesure du profil, la pièce à mesurer comporte une denture hélicoïdale et une largeur de dent insuffisante par rapport à l'angle d'inclinaison, dans le cas de laquelle la mesure du profil le long du creux de la marque d'avancement dépasse la largeur de la pièce et/ou présente une modification de la ligne de flanc, en particulier sous forme d'un bombé longitudinal et/ou d'une conicité ou d'une autre modification.

3. Procédé selon l'une quelconque des revendications précédentes, **caractérisé en ce que** lors de la mesure du pas de denture, la pièce à mesurer présente une denture hélicoïdale ou une denture droite et une modification de la ligne de flanc, en particulier sous forme d'un bombé longitudinal et/ou d'une conicité ou d'une autre modification.

4. Procédé selon l'une quelconque des revendications précédentes, **caractérisé en ce que** le palpeur de mesure, lorsqu'il quitte une zone d'évaluation prédéfinie (5, 17) le long de la ligne du profil ou de la largeur de dent, réalise de manière entièrement automatique, un changement de la position du palpeur (15).

5. Procédé selon l'une quelconque des revendications précédentes, **caractérisé en ce que** la pièce à mesurer est une roue segmentée.

6. Procédé selon l'une quelconque des revendications précédentes, **caractérisé en ce qu'**un calcul de correction mathématique est exécuté au niveau d'un point de saut du palpeur de mesure entre deux marques d'avancement (12a, 12), pour éviter une erreur d'angle de profil supplémentaire dans le protocole de mesures.

7. Procédé selon la revendication 6, **caractérisé en ce que** la différence de la mesure de la ligne de flanc et/ou d'une mesure du profil et/ou d'une mesure topographique est utilisée comme base pour le calcul de correction mathématique.

8. Procédé selon la revendication 6, **caractérisé en ce qu'**on utilise comme calcul de correction mathématique une superposition de parties de la courbe de mesure, en particulier de la courbe de mesure du profil ou du courbe de mesure de division.

9. Procédé selon l'une quelconque des revendications précédentes, **caractérisé en ce que** ledit procédé peut être utilisé pour des pièces qui ont été fabriquées avec une fraise à un ou plusieurs filets, dans le cas d'une denture réalisée au moyen de fraises à plusieurs filets, un saut étant répété séparément entre des marques d'avancement voisines (12a, 12b), de préférence uniquement dans le cadre de l'opération de fraisage et/ou pour chaque passage de l'outil.

10. Procédé selon l'une quelconque des revendications précédentes, **caractérisé en ce qu'**au moins deux marques d'avancement (12a, 12b) par flanc sont disposées sur la pièce dentée.

11. Procédé selon l'une quelconque des revendications précédentes, **caractérisé en ce que** ledit procédé peut être réalisé à l'intérieur d'une machine, en particulier d'une machine de mesure ou d'une machine à tailler les engrenages CNC avec un palpeur de mesure.

12. Unité d'évaluation, comprenant une commande ou une programme informatique pour réaliser le procédé selon l'une quelconque des revendications 1 à 11.
